# EUROPEAN PATENT SPECIFICATION

(11) **EP 0 457 280 B1**
(45) Date of publication and mention of the grant of the patent: **11.08.1999**
(21) Application number: 91107801.2
(22) Date of filing: 14.05.1991
(51) Int. Cl.: G03B 21/62

(54) **Screen and projection system using said screen**
Projektionsschirm und Projektionssystem mit diesem Schirm
Ecran et système de projection utilisant celui-ci

(30) Priority: 14.05.1990 JP 12108690
(43) Date of publication of application: 21.11.1991
(73) Proprietor: CANON KABUSHIKI KAISHA, Tokyo (JP)
(72) Inventor: Mitsutake, Hideaki, c/o Canon Kabushiki Kaisha, Tokyo (JP); Kawasaki, Shigeru, c/o Canon Kabushiki Kaisha, Tokyo (JP)
(74) Representative: Tiedtke, Harro, Dipl.-Ing.

(56) References cited:
- EP-A- 0 118 951
- EP-A- 0 305 009
- JP-A- 63 004 228
- US-A- 2 213 077
- PATENT ABSTRACTS OF JAPAN vol. 10, no. 101 (P-447) 17 April 1986 & JP-A-60 232 538 ( ARISAWA SEISASKUSHO K.K. ) 19 November 1985
- PATENT ABSTRACTS OF JAPAN vol. 12, no. 203 (P-715) 11 June 1988 & JP-A-63 004 428 ( MITSUBISHI RAYON CO LTD ) 9 January 1988
- PATENT ABSTRACTS OF JAPAN vol. 13, no. 324 (P-903)21 July 1989 & JP-A-1 092 733 ( HITACHI LTD ) 12 April 1989

## Description

### BACKGROUND OF THE INVENTION

### Field of the Invention

The present invention relates to a screen and a projection system using said screen, and more particularly to a screen having a lenticular sheet and a projector system for displaying an image using such screen.

### Related Background Art

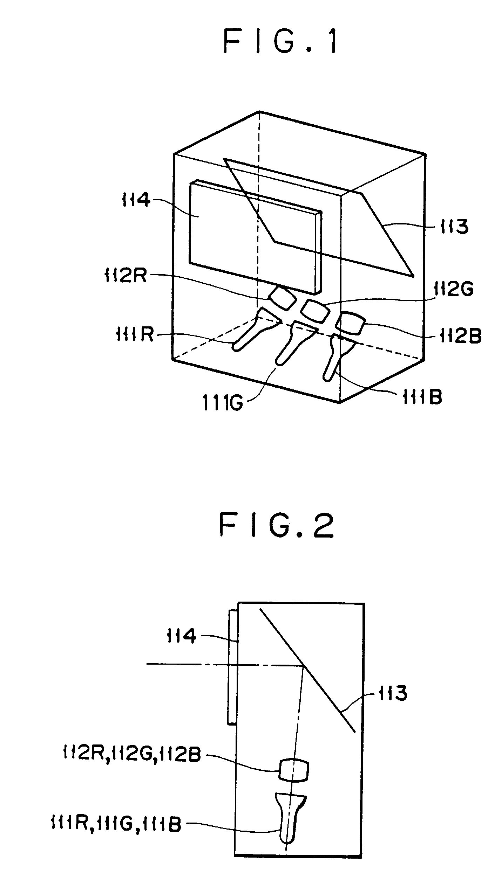

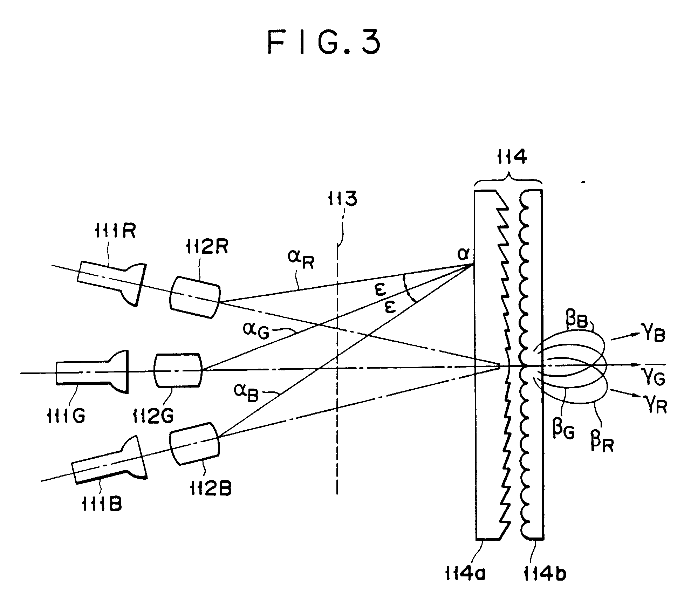

Figs. 1 and 2 are a perspective view and a side view showing a rear projection display unit which has been conventionally used, respectively. Fig. 3 shows an optical arrangement of the display unit developed in a plane.

As shown in Figs. 1 and 2, red, green and blue images displayed respectively on the tube planes of three CRTs 111R, 111G and 111B are magnified and projected via three projection lenses 112R, 112G and 112B, and a reflecting mirror 113, so that a color image built up by the red, green and blue images is displayed on a translucent (or transmissible) screen 114.

The screen 114 is composed of a Fresnel lens sheet 114a having a function of directing a light from each of projection lenses 112R, 112G, 112B toward the observer and a lenticular lens sheet 114b having a function of extending the angle of visibility of the unit by diffusing the light, as shown in Fig. 3.

In this display unit, lights α_{R}, α_{G}, α_{B} reaching an arbitrary point a on the screen 114 are incident at a certain angle ε (thereafter referred to as "convergence angle"). Thereby, lights β_{R}, β_{G}, β_{B} diffused by the lenticular lens sheet 114b have different directions with the most intensive lights γ_{R}, γ_{G}, γ_{B}, depending on the convergence angle of each light α_{R}, α_{G}, α_{B}, so that a phenomenon called a "color shift", in which the color appears to be varied depending on a direction of observation, may occur, causing a degraded image.

As to the lenticular lens sheet having a function of eliminating the "color shift", as disclosed in JP-A-58 134 627, there is a method that the shapes of lens surfaces on the incident and emergent surfaces are made aspherical so as to eliminate the color shift with the effects of both aspherical surfaces.

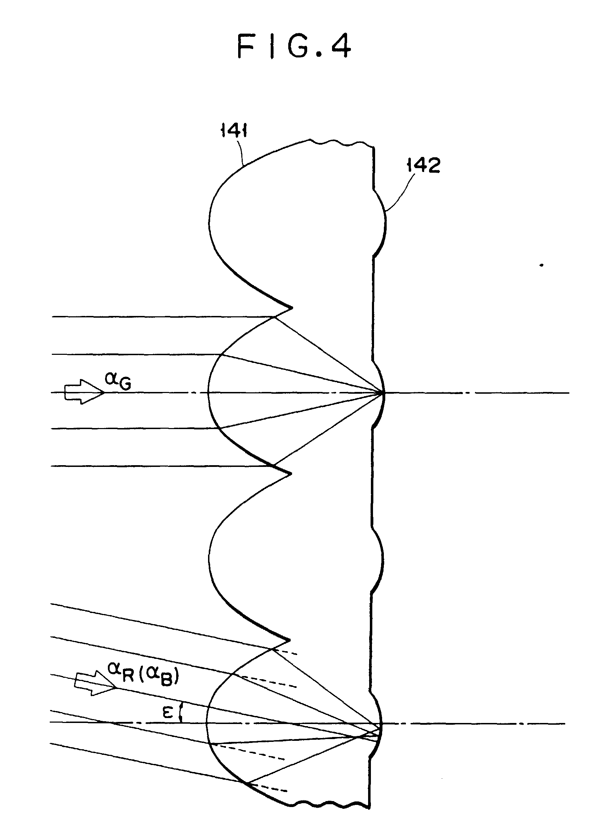

Fig. 4 is an enlarged view showing a basic construction of the lenticular lens sheet as described in the above application.

The lenticular lens sheet is a two-sided lenticular lens sheet composed of an incident external surface 141 formed of aspherical lens surfaces in or near elliptical shape, and an emergent external surface 142 formed of aspherical lens surfaces having a positive power disposed in an area onto which the light beam refracted at the incident surface converges. Each lens surface on the incident surface 141 has zero spherical aberration by making its eccentricity e an appropriate value (e=l/n) for a refractive index n of sheet material, and when the incident angle of a principal light beam onto the lenticular lens sheet is zero, as in the case of a light flux from the green light projection lens 112G as shown in Fig. 3, the light beam refracted at the incident surface 141 will converge into one point, at or near which convergent point is disposed the emergent surface 142. On the other hand, the light fluxes from the red and blue projection lenses 112R, 112B having non zero incident angles of principal light beams onto the lenticular lens sheet may produce a coma aberration due to refraction at the incident surface 141, and so do not converge into a point on the emergent surface 142.

A mechanism for eliminating the color shift makes use of the displacement of incident position onto the emergent surface 142 which may be caused by the coma aberration. That is, the refractive angle at the emergent surface 142 of principal light beams in light fluxes from the projection lenses 112R, 112B incident onto each point on the emergent surface 142 are adjusted so that the luminance distribution of diffused light formed on the operator side by light flux from the projection lens 112G and that of each of light fluxes from the projection lenses 112R, 112B may coincide. On each point on the emergent surface 142, the orientation of plane can be determined to correspond to the above refractive angle, so that the emergent surface can be shaped by connecting them smoothly.

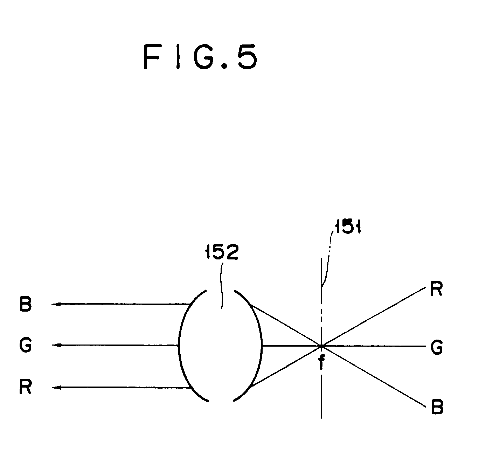

Fig. 5 is a schematic view for explanation of the principle for eliminating the above color shift by replacement with a telecentric optical system.

An optical system of Fig. 5 places a diaphragm 151 at the focal position of a condenser lens 152, wherein when light beams of three colors R, G, B with equal intensities enter this optical system at different incident angles, each emergent light beam will exit therefrom with equal intensity and direction. This means that the color shift has been eliminated.

With the above method, the color shift can be eliminated.

In order to further enlarge the angle of visibility with the above lenticular lens sheet, the effective width of lens surfaces on the incident surface 141 must be extended. Accordingly, with a wider angle of visibility, the distance between incident and emergent surfaces (plate thickness) for a lens pitch of the lenticular lens sheet is correspondingly reduced. For example, to obtain an angle of visibility (half band width) of 40°, the sheet thickness for the lenticular lens sheet must be thinned up to a pitch of lens for the lenticular lens sheet.

With the restriction, the screen for high definition image display unit such as HDTV (a pitch of 0.4mm for the lenticular lens sheet is necessary for a horizontal resolution of 1000 lines and a screen size of 1000 mm (40 inches) (aspect ratio 9:16)) may require a very thin lenticular lens sheet, thereby causing a lack of mechanical strength.

Also, the screen of high definition has a disadvantage that owing to finer pitch of lens, blinding due to dust and dirt may easily occur, which requires to perform the maintenance.

Document JP-A-634228 discloses a screen for displaying an image projected onto the screen. The screen comprises a lenticular lens sheet of a transparent material having a major surface which constitutes an array of lens surfaces each having a positive refractive power. A circular concave Fresnel lens is bonded to that side of the lenticular lens sheet opposite to the array of lens surfaces. The Fresnel lens is constituted by an array of lens portions, each of these lens portions having a refractive index higher than that of the lenticular lens sheet and a positive refractive power on the interface with the lenticular lens sheet. In operation of this known screen there appears the same "color shift" phenomenon which is explained in the above with regard to the screen 114 shown in Fig. 3.

### SUMMARY OF THE INVENTION

In view of the foregoing conventional problems, the present invention provides an improved screen and an improved projection system.

A screen according to a first aspect of the present invention comprises the features of claim 1. A screen according to a second aspect of the present invention comprises the features of claim 11. Projection systems according to the present invention are defined in claims 19 and 20.

Advantageous further developments of the screen and the projection system according to the invention are defined in the dependent claims.

Examples illustrating specific constitutions for a screen and a projection system according to the present invention will be described in the following, but the present invention is not limited to these examples, in which various forms of screen and projection system can be provided based on a concept of the present invention.

### BRIEF DESCRIPTION OF THE DRAWINGS

Figs. 1 and 2 are a perspective view and a side view showing a constituion of conventional example, respectively.

Fig. 3 is a view showing a conventional optical arrangement expanded in a plane.

Fig. 4 is a view showing a basic constitution for a conventional lenticular lens sheet.

Fig. 5 is a view for explaining a principle of eliminating the color shift in a conventional example.

Figs. 6 and 7 are a perspective view and a side view showing a consitution of a first example according to the present invention, respectively.

Fig. 8 is a view showing an optical arrangement of the first example expanded in a plane.

Fig. 9 is an upper view for explaining in detail the constitution of a screen 4 as shown in Fig. 6.

Fig. 10 is a partial enlarged view for explaining the constitution of a lenticular lens sheet 4b as shown in Fig. 9.

Fig. 11 is a view showing an optical principle for explaining a color shift eliminating mechanism in the first example.

Fig. 12 is a view for explaining an example of method for fabricating the lenticular lens sheet 4b as shown in Fig. 9.

Fig. 13 is a view showing the constitution of essential parts in a second example according to the present invention.

Fig. 14 is a view showing a distribution of refractive index in the direction symmetrical to the central axis of a lens portion 82 as shown in Fig. 13.

Fig. 15 is an upper view showing a constitution of essential parts in a third example according to the present invention.

### DESCRIPTION OF THE PREFERRED EMBODIMENTS

According to a first aspect of the invention, an example of a translucent (or transmissible) screen as disclosed below is one having a lenticular lens sheet for diffusing the light in a horizontal direction, in which the lenticular lens sheet comprises an array of lens portions provided along a travelling direction of the incident light. The opposite surfaces of the lens portions constitute a first and a second array of lens surfaces which are formed in the interior of the lenticular lens sheet. The lenticular lens sheet furthermore comprises a third array of lens surfaces for causing the refractive action of a positive power.

As the lens surfaces of the third array of lens surfaces, aspherical shaped lens surfaces are shown in which the curvature gradually increases from the optical axis to the outside thereof, such as stretching an incident surface in a direction of optical axis. As the lens portions, there are shown a form of bar-like lens portions which are formed of a material of higher refractive index than a material of a transparent layer of the sheet for defining the incident and emergent surfaces embedded in the interior of the lenticular lens sheet.

The light incident upon an incident surface of the lenticular lens sheet passes through the lens surfaces of the first to third arrays of lens surfaces, and exits in diffused ray from an emergent surface of sheet. As the first, the second and the third lens surfaces produce the positive power refractive index action, the above incident light is converged by the third lens surfaces if the third lens surfaces are formed on the incident surface, and further converged in passing through the first and second lens surfaces formed in the interior of lenticular lens, so that it exits in diffused state from the emergent surface. Thereby, it is possible to emanate the emergent light in wide angular range regardless of the plate thickness of lenticular lens sheet. As this emergent surface may not (or may) give the lens action, it can be formed flat. Since the refractive angle of light beam at the first and second lens surfaces is different depending on the incident position of light beam onto the first lens surfaces, it is also possible to make the incident lights in parallel form and emanate them, when a plurality of incident lights (e.g., light for each color of R, G, B) enter the lenticular lens sheet at different angles.

According to a second aspect of the invention, an example of a translucent (or transmissible) screen as disclosed below is one having a lenticular lens sheet for diffusing the light in a horizontal direction, in which the lenticular lens sheet comprises a first array of lens surfaces for causing the refractive action of a positive power and a second array of lens surfaces provided along a travelling direction of the incident light, with the second array of lens surfaces being formed in the interior of the lenticular lens sheet.

An array of bar-like lens portions of the refractive index distribution type is commonly used for the first and second arrays of lens surfaces, wherein the first array of lens surfaces is disposed on an incident surface of the lenticular lens sheet.

The light incident upon an incident surface of the lenticular lens sheet passes through the first and second arrays of lens surfaces, and exits in diffused ray from an emergent surface of sheet. As both the first and the second lens surfaces produce the positive power refractive index action, the above incident light is converged by the lens surfaces of the first array of lens surfaces if the first array of lens surfaces is formed on the incident surface, and further converged in passing through the lens surfaces of the second array of lens surfaces formed in the interior of lenticular lens sheet, so that it exits in diffused state from the emergent surface. Thereby, it is possible to emanate the emergent light in wide angular range regardless of the plate thickness of lenticular lens sheet. As this emergent surface may not (or may) give the lens action, it can be formed flat. Since the refractive angle of light beam at the second array of lens surfaces is different depending on the incident position of light beam onto the lens surfaces of the second array of lens surfaces, it is also possible to make the incident lights in parallel form and emanate them, when a plurality of incident lights (e.g., light for each color of R, G, B) enter the lenticular lens at different angles.

When a projection type display unit is constituted with the lenticular lens sheet according to the first or second aspect, a wide angle of visibility can be obtained with the above action and the color shift is not produced.

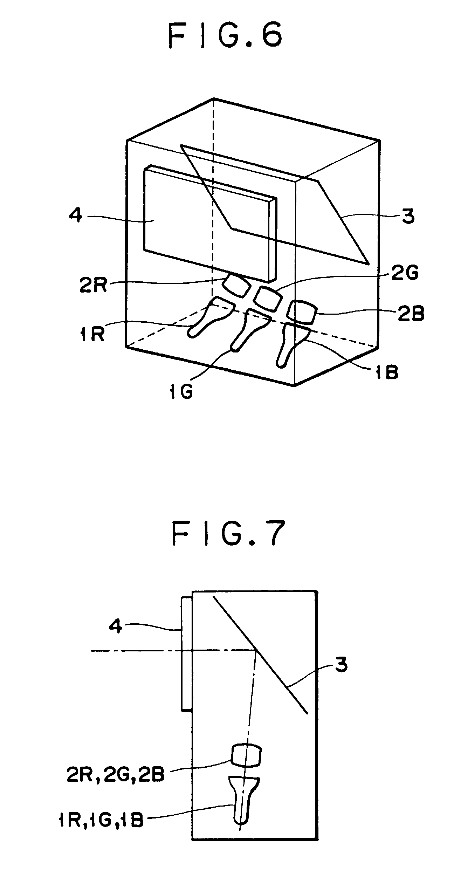

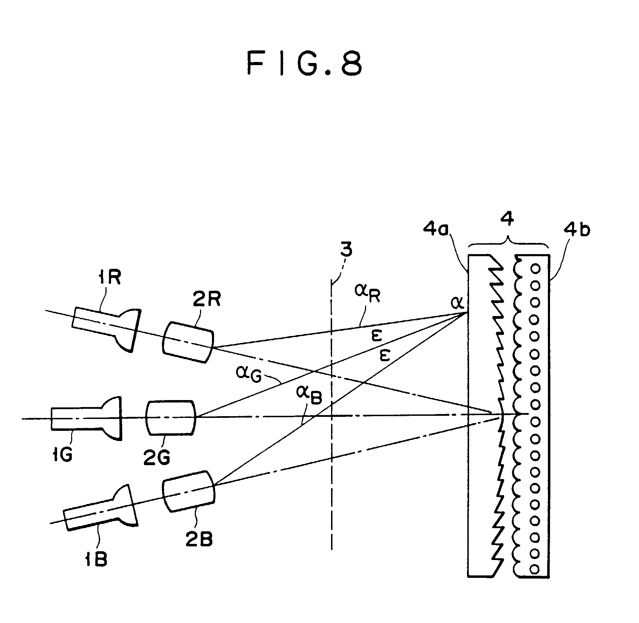

Figs. 6 and 7, respectively, are a perspective view and a side view showing the constitution of an example of a projection system according to the present invention, this projection system being a rear projection display unit. Fig. 8 shows an optical arrangement of the rear projection display unit expanded in a plane.

As shown in Figs. 6 and 7, red, green and blue images displayed respectively on tube planes of three CRTs, 1R, 1G and 1B are magnified and projected via three projection lenses 2R, 2G and 2B and a reflecting mirror 3, so that a color image built up of red, green and blue images is displayed on a translucent screen 4.

Each of the three CRTs 1R, 1G and 1B forms a projecting optical system together with the respective one of the projection lenses 2R, 2G and 2B.

The screen 4 is composed of a Fresnel lens sheet 4a having a function of directing a light from each of projection lenses 2R, 2G, 2B toward the observer and a lenticular lens sheet 4b having a function of extending the angle of visibility of the unit by diffusing the light, as shown in Fig. 8.

In this display unit, the lights α_{R}, α_{G}, α_{B} reaching an arbitrary point α on the screen are incident thereon at a certain angle ε (thereafter referred to as "convergence angle"). For example, when three CRT tubes 1R, 1G, 1B having a diagonal screen size of 177.8 mm (7 inches) (aspect ratio 3:4) are juxtaposed, the pupil center distance for each projection lens 2R, 2G, 2B is about 150mm. Accordingly, the projection distance is 800mm (the maximum angle of view for the projection lens is about 33 degrees in a diagonal display screen size of 1016 mm (40 inches)), the convergence angle ε on a central portion of screen is about 10 degrees.

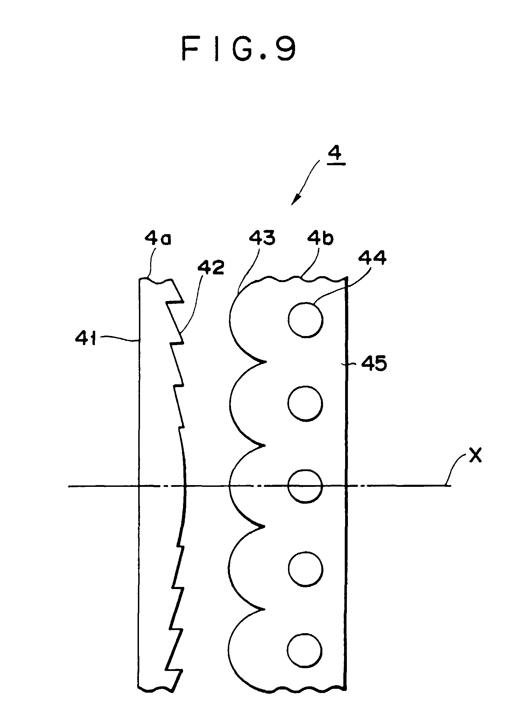

Fig. 9 is an upper view for explaining in detail the constitution of a screen 4.

A Fresnel lens sheet 4a constituting an element of the screen 4 comprises an incident surface 41 of plane and an emergent surface 42 of Fresnel lens plane. The focal distance of the Fresnel lens sheet 4a is approximately equal to a distance between each of projection lenses 2R, 2G, 2B and the screen 4, so that each light flux (principal light beam) expanding all over the screen from each projection lens 2R, 2G, 2B is deflected to be approximately parallel to the optical axis X of lenticular lens sheet 4b. The Fresnel lens sheet 4a is made of a plastic material such as acrylic or polycarbonate.

An incident major surface 43 of lenticular lens sheet 4b as shown in Fig. 9 has a lenticular shape and is constituted by an array of cylindrical and aspherical lens surfaces each having a positive refractive power, like a conventional incident surface 141 as shown in Fig. 4. In the present context, the array of lens surfaces constituting the incident major surface 43 is designated "the third array of lens surfaces". The lenticular lens sheet 4b furthermore comprises an array of cylindrical lens portions 44 which are arranged in the area onto which each light beam refracted at the incident major surface 43 is converged and which are made of a homogeneous medium with higher refractive index than that of a transparent layer into which the lens portions 44 are embedded. The surfaces of the lens portions 44 constitute a first array of lens surfaces 44a and a second array of lens surfaces 44b, these surfaces having a refractive action of positive power. An emergent major surface 45 of the sheet 4b is a flat surface. The light flux deflected by the Fresnel lens sheet 4a enter the lenticular lens sheet 4b over the whole area on the screen, in approximately parallel to the above optical axis X for the principal light beam from the green projection lens 2G, or in the direction oblique to the optical axis (i.e., with some convergence angle) for the principal light beams from the red or blue projection lenses 2R, 2B.

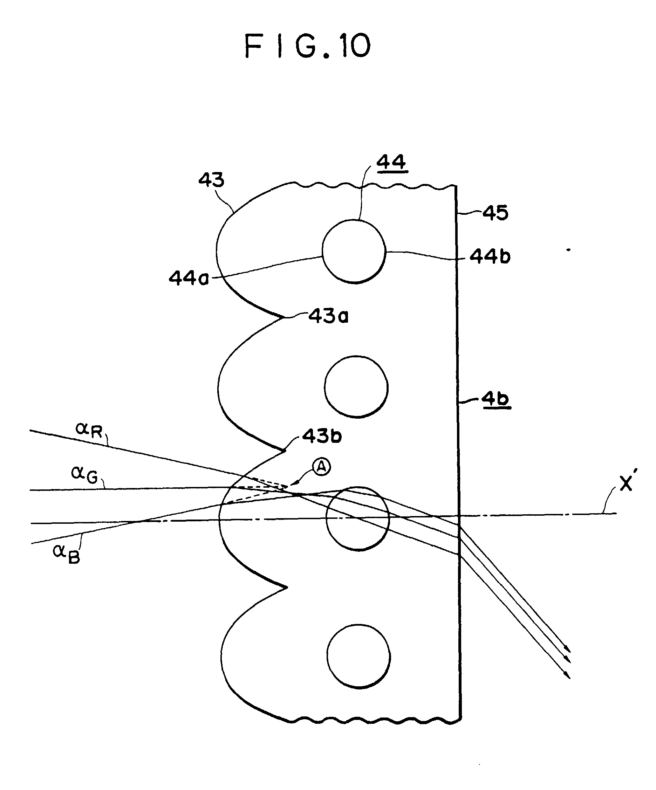

Fig. 10 is a partially enlarged view for explaining the constitution of a lenticular lens sheet 4b, wherein one optical path is illustrated for each principal light beam α_{R}, α_{G}, α_{B} of the image forming light flux from each projection lens 2R, 2G, 2B.

Firstly, considering the green light α_{G} which is parallel to the optical axis X', it is refracted at a lens surface of the incident surface 43, further refracted at the lens surfaces 44a and 44b formed by the surfaces of a lens portion 44 at the interface between the lens portion 44 and the transparent layer, finally refracted at the emergent surface 45, and exits therefrom. The above four refractive surfaces have all the deflection action for deflecting the incident light in a direction of optical axis. And the light converging action with the three lens surfaces except for the emergent surface 45 allows for a screen having the wide angle of visibility. Particularly, as the refractive power can be dispersed with these three lens surfaces, unlike a two-sided lenticular lens sheet as shown in the conventional example, a refractive surface for the wide angle of visibility can be constructed without difficulty.

Next, the color shift eliminating function of this example will be described.

In the lenticular lens sheet 4b, the surface containing junction points 43a, 43b between adjacent lens surfaces on the incident surface 43 is a diaphragm (or iris) position for a unit of lens. This diaphragm position is almost coincident with a focal position of the lens portion 44. Each light beam (principal light beam) α_{R}, α_{G}, α_{B} is selected so that the extension line of each light beam can pass through a point Ⓐ on the diaphragm. The light beams α_{R}, α_{G}, α_{B} have the incident angles increasing in the order of α_{R}, α_{G}, α_{B} for the lens surface 44a on the incident side of the lens portion 44 with higher refractive index, and also the deflection angles of the lens portion 44 increasing in the order of α_{R}, α_{G}, α_{B}. Accordingly, differences between α_{R}, α_{G}, α_{B} in the travelling direction become smaller. The lens surface 44b on the emergent side has the similar effects, so that it is possible to make almost parallel the travelling directions of three color light beams α_{R}, α_{G}, α_{B} due to the action of the lens surfaces 44a, 44b of the lens portion with higher refractive index. The above effects come true for the light beam passing through all points on the diaphragm surface. Accordingly, the distributions of the angle of visibility in the emergent light beams α_{R}, α_{G}, α_{B} are made equal to each other, so that the color shift of the unit can be eliminated.

The above color shift eliminating mechanism will be described on principle.

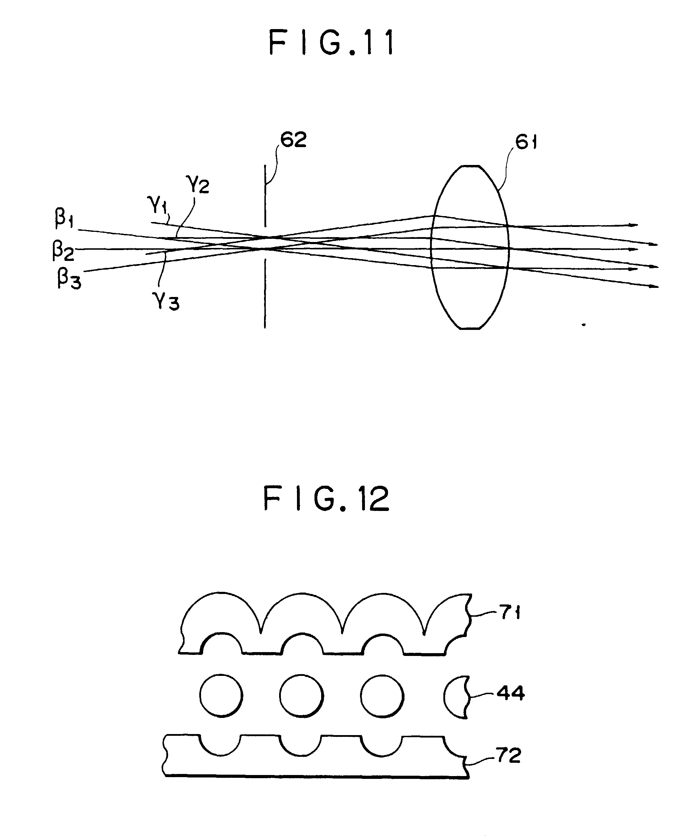

As shown in Fig. 11, in a telecentric optical system where a diaphragm 62 is placed at a focal position of a convex lens 61, the light fluxes β₁, β₂, β₃ incident at angles upon a point of the diaphragm 62 exit therefrom in parallel to each other with the action of the convex lens 61. The points γ₁, γ₂, γ₃ lying outside of an axis on the diaphragm 62 also come true. In the lenticular lens sheet 4b of the present invention, the junction points 43a, 43b of adjacent lens surfaces on the incident surface 43 may correspond to the above diaphragm plane 62, and the lens portion 44 with higher refractive index may correspond to the convex lens 61.

As a material of the lenticular lens sheet 4b, for example, the transparent layer, i.e. the portion except for the lens portion 44 with higher refractive index, is constructed of an acrylic material having a refractive index of about 1.5, and the lens portion with higher refractive index is constructed of a polycarbonate material having a refractive index of about 1.6. But it will be understood that the material is not limited to the above type. Accordingly, it is possible to use a glass material rather than plastic.

One method of manufacturing a lenticular lens sheet 4b can be conceived in which it is formed by bonding mutually three portions of a first member 71 having an array of meniscus cylindrical lens surfaces, a second member 72 having a flat major surface and a plurality of cylindrical lens portions 44, as shown in Fig. 12, for example.

With the lenticular lens sheet 4b of the present invention, as the emergent surface 45 is a plane, its action for the light beam is not changed in whatever position the emergent surface may be placed in accordance with the thickness of lenticular lens sheet. Accordingly, the plate thickness can be obtained with sufficient mechanical strength.

Also, the screen 4 of the present invention is a combination of a Fresnel lens sheet 4a whose incident surface is a plane and a lenticular lens sheet 4b whose emergent surface is a plane, so that the screen with easy maintenance can be constructed because of the planes at both sides.

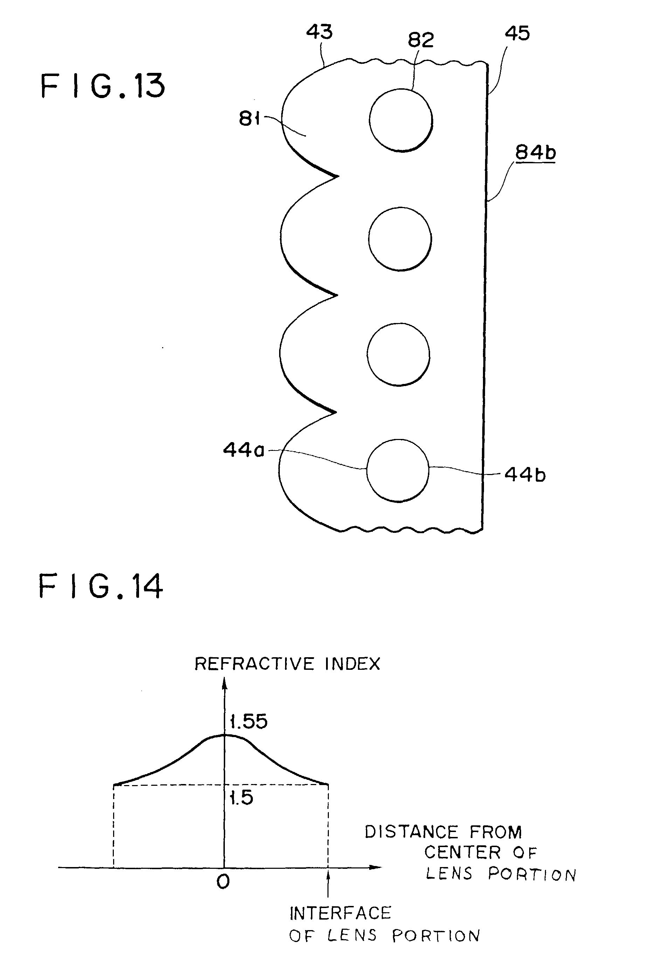

Fig. 13 is an enlarged upper view showing the constitution of essential parts for a lenticular lens sheet 84b in a second example according to the present invention, and Fig. 14 is a view showing a distribution of refractive index in the direction (radial direction) symmetrical to the central axis (optical axis) for a cylindrical lens portion 82 as shown in Fig. 13. The lenticular lens sheet 84b of this example is one as used for the projection type display unit, in place of the sheet 4b of previous example.

In this example, the cylindrical lens portion 82 embedded into a transparent layer 81 of lenticular lens sheet 84b is one as partially formed of a material with higher refractive index, which has different refractive index or the distribution of refractive index. As the constituion except for the lenticular sheet 84b is the same as that shown in Figs. 8 and 9, and so the detail explanation will be omitted.

The lenticular lens sheet 84b is constructed of the transparent layer 81 made of an acrylic material with a refractive index of 1.5, and lens portions 82 of refractive index distribution type with a central refractive index of 1.55 and a peripheral refractive index of 1.5. An optical material for such a lens portion 82 is, for example, one obtained by diffusing a fluorine monomer in a polymer of diallyl phthalate (refractive index of 1.57 for polymer).

While the first example has the refractive action only on the opposite surfaces of the lens portion 44, it is possible in this example to avoid the color shift which can not sufficiently eliminated with the lens portion made of uniform medium in such a manner as to increase the refractive effect for the light beam passing through central region of the lens portion 82 or the refractive power in intermediate region of the lens portion 82 by controlling the refractive index within the lens portion to be variable.

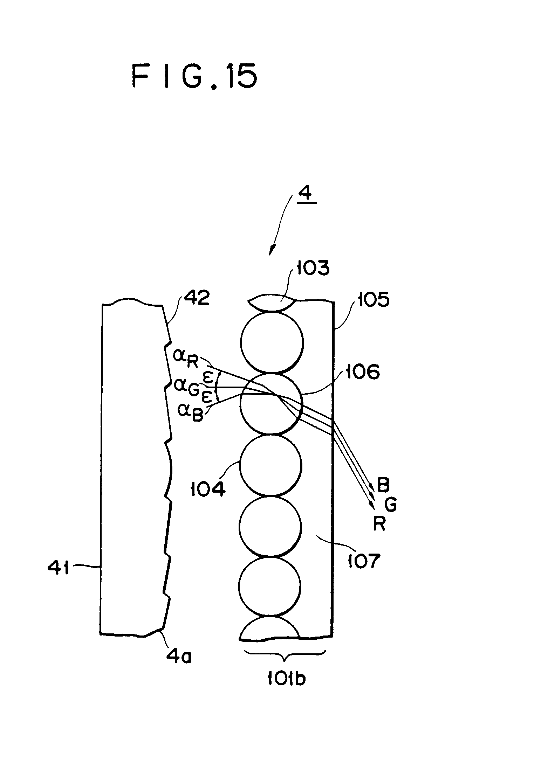

Fig. 15 is an upper view showing the constitution of essential parts for a screen in a third example according to the present invention. This screen is also provided on the projection type display unit as shown in Fig. 8. In the figure, 4a is a Fresnel lens sheet, as shown in the first example, which is constructed of an incident surface 41 formed as the plane and an emergent surface 42 formed as the Fresnel lens. The focal distance of this Fresnel lens sheet 4a is approximately equal to a distance from each projection lens to the screen, as previously described, so that the principal light beam of flux diffusing from each projection lens to the entire screen is made approximately parallel light flux. 101b is a lenticular lens sheet, including cylindrical lens portions 103 of refractive index distribution type provided on the side of the incident surface, the emergent major surface 105 being processed as flat, and a transparent layer 107 formed of a material of lower refractive index than central refractive index of the cylindrical lens portions 103.

The external surfaces of the lens portions 103 disposed on the incident side constitute a first array of lens surfaces at the incident major surface 104 of the sheet 101 b. Among the light fluxes deflected by the Fresnel lens sheet 4a, the principal light beam α_{G} for green light is incident in parallel to the optical axis of lenticular lens sheet 101b, and each of the principal light beams α_{R}, α_{B} for red and blue lights is incident at a convergence angle ε with respect to the optical axis of lenticular lens sheet 101b.

The refractive index distribution for the cylindrical lens portion 103 in this example has the same refractive action as that for a cylindrical lens surface on the incident surface 43 and a lens portion 44 in the first example (see Fig. 10), in which an array of cylindrical lens portions 103 can be used instead of the three arrays of lens surfaces in the first example. Therefore, each of incident light fluxes R, G, B can be sequentially converged in order due to the refractive action with a refractive index distribution at least in the interior of cylindrical lens portion 103, and with the difference of refractive index at the emergent surface 105, so that an appropriate angle of visibility extended over wide visible area can be obtained.

Next, the color shift eliminating mechanism in this example will be described. This principle is the same as that for the telecentric optical system as shown in Fig. 11. The lens surfaces of the incident surface 104 of the lenticular lens sheet 101b correspond to the diaphragm 62 as shown in Fig. 11, and are positioned approximately at the focal point of a second array of lens surfaces constituted by the interface 106 between the lens portions 103 and the transparent layer 107. The explanation is given qualitatively in the following.

The light beams α_{R}, α_{B} are incident upon the incident surface 104 at a convergence angle β with respect to the light beam α_{G}. Due to the refractive index distribution of positive power in the interior of the cylindrical lens portion 103, each incident light beam α_{R}, α_{G}, α_{B} has the deflection angle continuously changed in the interior of cylindrical lens portion 103 so that mutual differences between the light beams α_{R}, α_{G}, α_{B} in the travelling direction may become smaller in accordance with the incident angle and position on to the lens portion 103. Further, light beams α_{R}, α_{G}, α_{B} have different deflection angles at the interface 106 with the refractive action at the interface 106, depending on the incident angle upon the interface 106, so that the respective travelling directions after exiting from the interface 106 are made almost coincident, and the color shift can be eliminated.

It is noted that instead of the cylindrical lens portions 44, and the cylindrical lens portions 82, 103 of refractive index distribution type in the above example, spherical lens portion of refractive index distribution type can be laid therein, in which each incident light flux R, G, B can be diffused upward and downward, left and right, and therefore, over a further wider visible area. Also, it can be similarly conceived that the incident surface 43 is constituted of lens surfaces of rotation symmetry, rather than cylindrical lens surfaces.

While in the above example, the face shape of the lens portions in the lenticular lens sheet is shown as a cylindrical shape having a spherical surface in view of easy manufacture, it should be also noted that the face shape may be satisfied with a curved surface symmetrical with respect to the optical axis, and the degree of freedom in controlling the light beam can be improved if the face shape is made aspherical. It is also sufficient that the lenticular lens sheet may be formed as follows.
(1) Absorption zone such as black longitudinal stripes is partially formed in an area where image light will not pass through on an emergent surface of lenticular lens sheet.
(2) The emergent surface of lenticular lens sheet is processed for nonglare (irregularity processing).
(3) The emergent surface of lenticular lens sheet is processed to be unreflecting.

When the emergent surface of lenticular lens sheet is partially formed with an absorption zone as indicated by (1), the visibility of image can be improved because the reflective light at the emergent surface of screen is reduced so that the disturbance light is prevented from entering the interior of screen. When the nonglare processing as indicated by (2) is performed, the visibility of image can be also improved because the disturbance light is scattered. When the unreflecting processing as indicated by (3) is performed, the visibility can be also improved because the emergent light is prevented from reflecting upon the emergent surface, and flare is prevented from occurring with the Fresnel lens.

Moreover, while in each example, the lens portion is described as having the convergence action to the same optical axis as that for the lens surface of lenticular lens sheet at the incident side, it can be appreciated that the visibility can be further improved by displacing the optical axis of each lens surface relatively depending on the illuminating position of the incident light on to the screen, and such a constitution may be also permitted.

While in the first and second examples, the third array of lens surfaces is described as being formed on the side of an incident surface of lenticular lens sheet, it can be also realized that the third array of lens surfaces is formed on the side of an emergent surface of lenticular lens sheet, and the incident surface of sheet may be formed flat.

While in the third example, the first array of lens surfaces is described as being formed on the side of an incident surface of the lenticular lens sheet, it can also be realized that the first array of lens surfaces is formed on the side of an emergent surface of the lenticular lens sheet, and the incident surface of the sheet may be formed flat.

## Claims

1. A screen (4) for displaying an image projected onto said screen, said screen comprising a lenticular lens sheet (4b; 84b) which is constituted by a transparent layer (71-72; 81) having two major external surfaces (43, 45) and an array of biconvex lens portions (44; 82) completely embedded in said layer, the refractive index of said lens portions being higher than the refractive index of the layer so that the opposite surfaces (44a, 44b) of said lens portions relative to a direction (X; X') orthogonal to the sheet constitute a first (44a) and a second (44b) array of lens surfaces having positive refractive power, wherein one (43) of the two major surfaces of said layer has a lenticular shape constituting a third array of lens surfaces each having a positive refractive power, each of said lens surfaces of said third array of lens surfaces being optically aligned with a respective one of the lens portions of said array of lens portions.

2. A screen according to claim 1, wherein each of said lens portions (44; 82) is a cylindrical lens portion and wherein each of said lens surfaces of said third array of lens surfaces is a cylindrical lens surface.

3. A screen according to claim 1, wherein each of said lens surfaces of said third array of lens surfaces is a rotationally symmetric lens surface.

4. A screen according to claim 2, wherein
the generating line direction for each of said cylindrical lens portions (44; 82) is substantially coincident with that for each of said lens surfaces of said third array of lens surfaces.

5. A screen according to one of claims 1 to 4, wherein each lens surface of said third array of lens surfaces is formed aspherical.

6. A screen according to claim 5, wherein the radius of curvature of said aspherical lens surfaces gradually increases in leading away from the optical axis of each aspherical lens surface.

7. A screen according to one of claims 1 to 6, wherein each of said lens portions (44; 82) is made of a medium having a non-uniform refractive index distribution.

8. A screen according to one of claims 1 to 7, wherein the optical axis of each lens surface of said third array of lens surfaces and that of a respective one of the lens surfaces of said first array of lens surfaces (44a) are coincident with each other.

9. A screen according to one of claims 1 to 8, wherein said lens surfaces of said first, second and third arrays of lens surfaces constitute a substantially telecentric system on one of the major surfaces (45) of said sheet (4b; 84b) constituting an external surface of the screen.

10. A screen according to one of claims 1 to 9, wherein the other one of the two major surfaces of said layer (71-72; 81) is substantially flat.

11. A screen according to one of claims 1 to 10, further comprising a Fresnel lens sheet (4a).

12. A screen (4) for displaying an image projected onto said screen, said screen comprising a lenticular lens sheet (101b) which is constituted by a transparent layer (107) having a first (106) and a second (105) major surface and an array of biconvex lens portions (103) only partially embedded in said layer on said first major surface (106), the refractive index of said lens portions being higher than the refractive index of the layer so that the opposite surfaces (104, 106) of said lens portions relative to a direction orthogonal to the sheet constitute a first (104) and a second (106) array of lens surfaces having positive refractive power, wherein said second array of lens surfaces is constituted by the interface (106) between said layer and said array of lens portions (103), and wherein said second major surface (105) of said layer constitutes one of the external surfaces of the sheet and said first array of lens surfaces (104) constitutes the other one of the external surfaces of the sheet.

13. A screen according to claim 12, wherein each of said lens portions (103) is a cylindrical lens portion.

14. A screen according to claim 12 or 13, wherein each lens surface of said first array of lens surfaces (104) is formed aspherical.

15. A screen according to claim 14, wherein the radius of curvature of said aspherical lens surfaces gradually increases in leading away from the optical axis of each aspherical lens surface.

16. A screen according to one of claims 12 to 15, wherein each of said lens portions (103) is made of a medium having a non-uniform refractive index distribution.

17. A screen according to one of claims 12 to 16, wherein said first array of lens surfaces (104) and said second array of lens surfaces constitute a substantially telecentric system on said second external surface (105) of said sheet (107).

18. A screen according to one of claims 12 to 17, wherein said second one of the two major surfaces of said layer (107) is substantially flat.

19. A screen according to one of claims 12 to 18, further comprising a Fresnel lens sheet (4a).

20. A projection system comprising:
a screen (4) as defined in one of claims 1 to 19; and a projector system (1R, 1G, 1B, 2R, 2G, 2B, 3) for projecting an image on said screen.

21. A projection system comprising :
a screen (4) as defined in claim 11 or 19; and a projector system (1R, 1G, 1B, 2R, 2G, 2B, 3) for projecting an image on said screen (4), said Fresnel lens sheet (4a) allowing the principal light beam of flux showing said image from said projector system to be parallel light, and directing the light flux showing said image on to said sheet (4b, 84b, 101b).

22. A projection system according to claim 21, wherein said sheet (4b, 84b, 101b) allows the light flux showing said image to be diffused at least within a horizontal surface.

23. A projection system according to one of claims 20 to 22, wherein said projector system (1R, 1G, 1B, 2R, 2G, 2B, 3) comprises at least three projecting optical systems for projecting each image of red, green and blue onto said screen (4).

## Patentansprüche

1. Projektionsschirm (4) zur Anzeige eines auf den Projektionsschirm projizierten Bilds, wobei der Projektionsschirm eine Platte (4b, 84b) aus linsenförmigen Linsen aufweist, welche durch eine transparente Schicht (71-72, 81), die zwei Hauptaußenflächen (43, 45) hat, und eine regelmäßige Anordnung von bikonvexen Linsenabschnitten (44, 82) gebildet ist, die vollständig in der Schicht eingebettet sind, wobei der Brechungskoeffizient der Linsenabschnitte höher als der Brechungskoeffizient der Schicht ist, so daß die gegenüberliegenden Flächen (44a, 44b) der Linsenabschnitte relativ zu einer Richtung (X, X') orthogonal zu der Platte eine erste (44a) und eine zweite (44b) regelmäßige Anordnung von Linsenflächen bilden, die eine positive Brechkraft haben, wobei eine (43) der zwei Hauptflächen der Schicht eine linsenförmige Form hat, die eine dritte regelmäßige Anordnung von Linsenflächen bildet, von denen jede eine positive Brechkraft hat, wobei jede der Linsenflächen der dritten regelmäßigen Anordnung von Linsenflächen optisch ausgerichtet mit einem entsprechenden der Linsenabschnitte der regelmäßigen Anordnung von Linsenabschnitten ist.

2. Projektionsschirm gemäß Anspruch 1, bei welchem jeder der Linsenabschnitte (44, 82) ein zylindrischer Linsenabschnitt ist, und bei welchem jede der Linsenflächen der dritten regelmäßigen Anordnung von Linsenflächen eine zylindrische Linsenfläche ist.

3. Projektionsschirm gemäß Anspruch 1, bei welchem jede der Linsenflächen der dritten regelmäßigen Anordnung von Linsenflächen eine rotationssymmetrische Linsenfläche ist.

4. Projektionsschirm gemäß Anspruch 2, bei welchem die Richtung der Erzeugenden für jeden der zylindrischen Linsenabschnitte (44, 82) im wesentlichen mit der Richtung für jede der Linsenflächen der dritten regelmäßigen Anordnung von Linsenflächen übereinstimmt.

5. Projektionsschirm gemäß einem der Ansprüche 1 bis 4, bei welchem jede Linsenfläche der dritten regelmäßigen Anordnung von Linsenflächen torisch ausgebildet ist.

6. Projektionsschirm gemäß Anspruch 5, bei welchem der Krümmungsradius der torischen Linsenflächen beim Wegführen von der optischen Achse jeder torischen Linsenfläche allmählich zunimmt.

7. Projektionsschirm gemäß einem der Ansprüche 1 bis 6, bei welchem jeder der Linsenabschnitte (44, 82) aus einem Medium gefertigt ist, das eine uneinheitliche Verteilung des Brechungskoeffizienten hat.

8. Projektionsschirm gemäß einem der Ansprüche 1 bis 7, bei welchem die optische Achse jeder Linsenfläche der dritten regelmäßigen Anordnung von Linsenflächen und die einer entsprechenden der Linsenflächen der ersten regelmäßigen Anordnung von Linsenflächen (44a) miteinander übereinstimmen.

9. Projektionsschirm gemäß einem der Ansprüche 1 bis 8, bei welchem die Linsenflächen der ersten, zweiten und dritten regelmäßigen Anordnung von Linsenflächen ein im wesentlichen telezentrisches System an einer der Hauptflächen (45) der Platte (4b, 84b) bilden, die eine Außenfläche des Projektionsschirms bildet.

10. Projektionsschirm gemäß einem der Ansprüche 1 bis 9, bei welchem die andere der zwei Hauptflächen der Schicht (71-72, 81) im wesentlichen flach ist.

11. Projektionsschirm gemäß einem der Ansprüche 1 bis 10, der ferner eine Fresnellinsenplatte (4a) aufweist.

12. Projektionsschirm (4) zur Anzeige eines auf den Projektionsschirm projizierten Bilds, wobei der Projektionsschirm eine Platte (101b) aus linsenförmigen Linsen aufweist, welche durch eine transparente Schicht (107), die eine erste (106) und eine zweite (105) Hauptfläche hat, und eine regelmäßige Anordnung von bikonvexen Linsenabschnitten (103) gebildet ist, die auf der ersten Hauptfläche (106) nur teilweise in der Schicht eingebettet sind, wobei der Brechungskoeffizient der Linsenabschnitte höher als der Brechungskoeffizient der Schicht ist, so daß die gegenüberliegenden Flächen (104, 106) der Linsenabschnitte relativ zu einer Richtung orthogonal zu der Platte eine erste (104) und eine zweite (106) regelmäßige Anordnung von Linsenflächen bilden, die eine positive Brechkraft haben, wobei die zweite regelmäßige Anordnung von Linsenflächen durch die Grenzfläche (106) zwischen der Schicht und der Anordnung von Linsenflächen (103 gebildet wird, und wobei die zweite Hauptfläche (105) der Schicht eine der Außenflächen der Platte bildet und die erste regelmäßige Anordnung von Linsenflächen (104) die andere der Außenflächen der Platte bildet.

13. Projektionsschirm gemäß Anspruch 12, bei welchem jeder der Linsenabschnitte (103) ein zylindrischer Linsenabschnitt ist.

14. Projektionsschirm gemäß Anspruch 12 oder 13, bei welchem jede Linsenfläche der ersten regelmäßigen Anordnung von Linsenflächen (104) torisch ausgebildet ist.

15. Projektionsschirm gemäß Anspruch 14, bei welchem der Krümmungsradius der torischen Linsenflächen beim Wegführen von der optischen Achse jeder torischen Linsenfläche allmählich zunimmt.

16. Projektionsschirm gemäß einem der Ansprüche 12 bis 15, bei welchem jeder der Linsenabschnitte (103) aus einem Medium gefertigt ist, das eine uneinheitliche Verteilung des Brechungskoeffizienten hat.

17. Projektionsschirm gemäß einem der Ansprüche 12 bis 16, bei welchem die erste regelmäßige Anordnung von Linsenflächen (104) und die zweite regelmäßige Anordnung von Linsenflächen ein im wesentlichen telezentrisches System an der zweiten Außenfläche (105) der Platte (107) bildet.

18. Projektionsschirm gemäß einem der Ansprüche 12 bis 17, bei welchem die zweite der zwei Hauptflächen der Schicht (107) im wesentlichen flach ist.

19. Projektionsschirm gemäß einem der Ansprüche 12 bis 18, der ferner eine Fresnellinsenplatte (4a) aufweist.

20. Projektionssystem, das aufweist,
einen Projektionsschirm (4), wie er in einem der Ansprüche 1 bis 19 definiert ist, und
ein Projektorsystem (1R, 1G, 1B, 2R, 2G, 2B, 3), um ein Bild auf den Projektionsschirm zu projizieren.

21. Projektionssystem, das aufweist,
einen Projektionsschirm (4), wie er in Anspruch 11 oder 19 definiert ist, und
ein Projektorsystem (1R, 1G, 1B, 2R, 2G, 2B, 3), um ein Bild auf den Projektionsschirm zu projizieren,
wobei die Fresnellinsenplatte (4a) gestattet, daß der Hauptstrahls des Lichtstroms, der das Bild von dem Projektorsystem zeigt, paralleles Licht ist, und der das Bild zeigende Lichtstrom auf die Platte (4b, 84b, 101b) gerichtet ist.

22. Projektionssystem gemäß Anspruch 21, bei welchem die Platte (4b, 84b, 101b) gestattet, daß der das Bild zeigende Lichtstrom zumindest innerhalb einer horizontalen Fläche gestreut wird.

23. Projektionssystem gemäß einem der Ansprüche 20 bis 22, wobei das Projektorsystem (1R, 1G, 1B, 2R, 2G, 2B, 3) mindestens drei optische Projektionssysteme aufweist, um jeweils rote, grüne und blaue Bilder auf den Projektionsschirm (4) zu projizieren.

## Revendications

1. Ecran (4) pour l'affichage d'une image projetée sur ledit écran, ledit écran comportant une feuille (4b ; 84b) à lentilles lenticulaires qui est constituée par une couche transparente (71-72 ; 81) ayant deux surfaces extérieures principales (43, 45) et un groupement de parties à lentilles biconvexes (44 ; 82) complètement encastré dans ladite couche, l'indice de réfraction desdites parties à lentilles étant plus élevé que l'indice de réfraction de la couche afin que les surfaces opposées (44a, 44b) desdites parties à lentilles par rapport à une direction (X ; X') orthogonale à la feuille constituent des premier (44a) et deuxième (44b) groupements de surfaces de lentilles ayant un pouvoir réfrigent positif, dans lequel l'une (43) des deux surfaces principales de ladite couche présente une forme lenticulaire constituant un troisième groupement de surfaces de lentilles ayant chacune un pouvoir réfrigent positif, chacune desdites surfaces de lentilles dudit troisième groupement de surfaces de lentilles étant alignée optiquement avec l'une, respective, des parties à lentilles dudit groupement de parties à lentilles.

2. Ecran selon la revendication 1, dans lequel chacune desdites parties (44 ; 82) à lentilles est une partie à lentille cylindrique et dans lequel chacune desdites surfaces de lentilles dudit troisième groupement de surfaces de lentilles est une surface de lentilles cylindrique.

3. Ecran selon la revendication 1, dans lequel chacune desdites surfaces de lentilles dudit troisième groupement de surfaces de lentilles est une surface de lentilles à symétrie de rotation.

4. Ecran selon la revendication 2, dans lequel la direction de la génératrice pour chacune desdites parties à lentilles cylindriques (44 ; 82) coincide sensiblement avec celle pour chacune desdites surfaces de lentilles dudit troisième groupement de surfaces de lentilles.

5. Ecran selon l'une des revendications 1 à 4, dans lequel chaque surface de lentilles dudit troisième groupement de surfaces de lentilles est formée de façon asphérique.

6. Ecran selon la revendication 5, dans lequel le rayon de courbure desdites surfaces de lentilles asphériques augmente progressivement en s'éloignant de l'axe optique de chaque surface de lentille asphérique.

7. Ecran selon l'une des revendications 1 à 6, dans lequel chacune desdites parties à lentilles (44 ; 82) est formée d'un milieu ayant une distribution non uniforme de l'indice de réfraction.

8. Ecran selon l'une des revendications 1 à 7, dans lequel l'axe optique de chaque surface de lentille dudit troisième groupement de surfaces de lentilles et celui de l'une, respective, des surfaces de lentilles dudit premier groupement de surfaces de lentilles (44a) coïncident entre eux.

9. Ecran selon l'une des revendications 1 à 8, dans lequel lesdites surfaces de lentilles desdits premier, deuxième et troisième groupements de surfaces de lentilles constituent un système sensiblement télécentrique sur l'une des surfaces principales (45) de ladite feuillle (4b ; 84b) constituant une surface extérieure de l'écran.

10. Ecran selon l'une des revendications 1 à 9, dans lequel l'autre des deux surfaces principales de ladite couche (71-72 ; 81) est sensiblement plate.

11. Ecran selon l'une des revendications 1 à 10, comportant en outre une feuille (4a) à lentilles de Fresnel.

12. Ecran (4) pour l'affichage d'une image projetée sur ledit écran, ledit écran comportant une feuille (101b) à lentilles lenticulaires qui est constituée par une couche transparente (107) ayant des première (106) et seconde (105) surfaces principales, et un groupement de parties à lentilles convexes (103) qui n'est que partiellement encastré dans ladite couche sur ladite première surface principale (106), l'indice de réfraction desdites parties à lentilles étant plus élevé que l'indice de réfraction de la couche afin que les surfaces opposées (104, 106) desdites parties à lentilles par rapport à une direction orthogonale à la feuille constituent des premier (104) et deuxième (106) groupements de surfaces de lentilles ayant un pouvoir réfringent positif, dans lequel ledit deuxième groupement de surfaces de lentilles est constitué par l'interface (106) entre ladite couche et ledit groupement de parties à lentilles (103), et dans lequel ladite seconde surface principale (105) de ladite couche constitue l'une des surfaces extérieures de la feuille et ledit premier groupement de surfaces de lentilles (104) constitue l'autre des surfaces extérieures de la feuille.

13. Ecran selon la revendication 12, dans lequel chacune desdites parties à lentilles (103) est une partie à lentille cylindrique.

14. Ecran selon la revendication 12 ou 13, dans lequel chaque surface de lentille dudit premier groupement de surfaces de lentilles (104) est formée de façon asphérique.

15. Ecran selon la revendication 14, dans lequel le rayon de courbure desdites surfaces de lentilles asphériques augmente progressivement en s'éloignant de l'axe optique de chaque surface de lentille asphérique.

16. Ecran selon l'une des revendications 12 à 15, dans lequel chacune desdites parties à lentilles (103) est formée d'un milieu ayant une distribution non uniforme de l'indice de réfraction.

17. Ecran selon l'une des revendications 12 à 16, dans lequel ledit premier groupement de surfaces de lentilles (104) et ledit deuxième groupement de surfaces de lentilles constituent un système sensiblement télécentrique sur ladite seconde surface extérieure (105) de ladite feuille (107).

18. Ecran selon l'une des revendications 12 à 17, dans lequel ladite seconde des deux surfaces principales de ladite couche (107) est sensiblement plate.

19. Ecran selon l'une des revendications 12 à 18, comportant en outre une feuille (4a) à lentilles de Fresnel.

20. Système de projection comportant :
un écran (4) tel que défini dans l'une des revendications 1 à 19 ; et
un système de projecteur (1R, 1G, 1B, 2R, 2G, 2B, 3) pour projeter une image sur ledit écran.

21. Système de projection comportant :
un écran (4) tel que défini dans la revendication 11 ou 19 ; et un système de projecteur (1R, 1G, 1B, 2R, 2G, 2B, 3) pour projeter une image sur ledit écran (4), ladite feuille (4a) à lentilles de Fresnel permettant au faisceau lumineux principal du flux montrant ladite image provenant dudit système de projecteur d'être une lumière parallèle, et dirigeant le flux lumineux montrant ladite image sur ladite feuille (4b, 84b, 101b).

22. Système de projection selon la revendication 21, dans lequel ladite feuille (4b, 84b, 101b) permet au flux lumineux présentant ladite image d'être diffusé au moins dans une surface horizontale.

23. Système de projection selon l'une des revendications 20 à 22, dans lequel ledit système de projecteur (1R, 1G, lB, 2R, 2G, 2B, 3) comporte au moins trois systèmes optiques de projection pour projeter chaque image en rouge, en vert et en bleu sur ledit écran (4).
